# EUROPÄISCHE PATENTANMELDUNG

(11) **EP 4 843 731 A1**
(43) Veröffentlichungstag der Anmeldung: **25.11.2026**
(21) Anmeldenummer: 26180018.9
(22) Anmeldetag: 20.05.2026
(51) Int. Cl.: B27B 31/00, B23Q 3/18, B23Q 7/06, B23Q 7/08, B23Q 16/00, B65H 29/48, B23Q 7/05

(54) **ÜBERGABEVORRICHTUNG**

(30) Priorität: 22.05.2025 DE 102025119921
(71) Anmelder: HOMAG GmbH, 72296 Schopfloch (DE)
(72) Erfinder: Kirn, Christoph, 72270 Baiersbronn (DE)
(74) Vertreter: Hoffmann Eitle

(57) **Zusammenfassung**

Es wird eine Übergabevorrichtung zum Übergeben eines Werkstücks bereitgestellt, umfassend: eine Auflageeinrichtung, wobei die Auflageeinrichtung in einer ersten Anordnung und in mindestens einer zweiten Anordnung positionierbar ist, eine Ausrichteinrichtung zum Ausrichten des Werkstücks, wobei die Auflageeinrichtung in der zweiten Anordnung derart positionierbar ist, dass ein an der Auflageeinrichtung befindliches Werkstück (W) an der Ausrichteinrichtung ausrichtbar ist.

## Beschreibung

### Technisches Gebiet

Die Erfindung betrifft eine Übergabevorrichtung, die eingerichtet ist, ein insbesondere plattenförmiges Werkstück zu übergeben, insbesondere an eine Bearbeitungsmaschine, wie eine Schmalflächenbeschichtungsmaschine.

### Stand der Technik

Im Bereich der holzverarbeitenden Industrie sind Beschichtungsmaschinen bekannt, die eingerichtet sind, ein Beschichtungsmaterial an einer Schmalseite eines Werkstücks anzubringen.

In der DE 10 2021 116 333 A1 wird in diesem Zusammenhang eine Führungsvorrichtung am Maschineneinlauf beziehungsweise Maschinenauslauf und eine Bearbeitungsmaschine beschrieben. Die Führungsvorrichtung weist eine Auflagefläche mit Luftauslässen auf, wobei die Luftauslässe eingerichtet sind, durch austretende Luft ein Luftkissen zwischen der Auflagefläche und dem Werkstück zu erzeugen.

Obwohl sich die in der DE 10 2021 116 333 A1 beschriebene Führungsvorrichtung bewährt hat, bestehen erhöhte Anforderungen für die Handhabung von Werkstücken.

### Darstellung der Erfindung

Die Erfindung zielt darauf ab, eine Übergabevorrichtung mit erweitertem Einsatzspektrum bereitzustellen.

Anspruch 1 zeigt hierfür eine Lösung. Weitere bevorzugte Ausführungsformen sind in den abhängigen Ansprüchen und in der nachfolgenden Beschreibung aufgeführt.

Insbesondere wird eine Übergabevorrichtung zum Übergeben eines Werkstücks bereitgestellt, umfassend: eine Auflageeinrichtung, wobei die Auflageeinrichtung in einer ersten Anordnung und in mindestens einer zweiten Anordnung positionierbar ist, und eine Ausrichteinrichtung zum Ausrichten des Werkstücks, wobei die Auflageeinrichtung in der zweiten Anordnung derart positionierbar ist, dass ein an der Auflageeinrichtung befindliches Werkstück an der Ausrichteinrichtung ausrichtbar ist.

Mit der erfindungsgemäßen Vorrichtung wird ein schnelles und komfortables Ausrichten von (insbesondere plattenförmigen) Werkstücken ermöglicht. Dabei kann ein Werkstück an einer Kante an der Ausrichteinrichtung definiert positioniert werden, damit es beispielsweise von einer Handhabungseinrichtung, wie einem Roboter oder einer Greifeinrichtung, aufgenommen und einer Beschichtungsmaschine zugeführt werden kann.

Wird die Ausrichtung der Werkstücke nicht benötigt, zum Beispiel weil die Beschichtungsmaschine manuell bedient werden soll, kann die Übergabevorrichtung in eine erste Anordnung, insbesondere in eine horizontale Ausrichtung, positioniert, insbesondere geschwenkt, werden. Hierdurch kann eine Fläche bereitgestellt werden, über die das Werkstück bewegt werden kann. Der Maschinenbediener kann demnach vermeiden, Werkstücke anzuheben, um sie von der Rückführung zur Beschichtungsmaschine zu bewegen.

Im Fall von kleineren Werkstücken besteht ferner die Möglichkeit, mehrere solcher Werkstücke zu sammeln und gemeinsam von der Handhabungseinrichtung, insbesondere einem Roboter, zu entnehmen. Dies ermöglicht, dass eine höhere Anzahl an Werkstücken pro Zeit entnommen und somit auf der Beschichtungsmaschine bearbeitet werden kann.

Im Vergleich zu einer Werkstückerkennung mittels einer Kamera ist die Übergabevorrichtung deutlich schneller, da für die Werkstückerkennung mit Kamera für jedes Werkstück eine Lagebilderfassung durchgeführt werden müsste.

Für die manuelle Bedienung einer Beschichtungsmaschine, bei der eine Handhabungseinrichtung nicht im Betrieb ist, kann die Übergabevorrichtung in eine waagrechte Position geschwenkt werden. Somit kann ein Verschieben der Werkstücke über die Übergabevorrichtung durch den Bediener einfach und zügig durchgeführt werden.

Durch die Anordnung des motorisch angetriebenen Lineals, sowie des Anschlages unterhalb der Nulllinie (Unterkante des Werkstückes) sind diese bei der manuellen Bedienung der Beschichtungsmaschine keine Störkonturen und damit ein unterbrechungsfreies Bewegen von Werkstücken auf einer durchgehenden oder nahezu durchgehenden Ebene möglich. Entsprechend muss der Maschinenbediener keine Werkstücke anheben, um diese manuell von der Rückführung zum Einlauf der Beschichtungsmaschine zu bewegen.

Gemäß einer Ausführungsform ist es bevorzugt, dass ein Gelenk vorgesehen ist, wobei die Auflageeinrichtung von der ersten Anordnung zur zweiten Anordnung um das Gelenk schwenkbar ist. Dies ermöglicht ein schnelles und sicher Wechseln zwischen der ersten Anordnung und der zweiten Anordnung der Auflageeinrichtung. Ein Gelenk kann als mechanisches Gelenk, wie ein Scharnier, oder als ein verformbarer, insbesondere elastischer, Körper ausgebildet sein.

Ferner kann es vorgesehen sein, dass die Auflageeinrichtung in der ersten Anordnung eine, insbesondere horizontale, Ebene bereitstellt, in der das Werkstück, in einer vertikalen Richtung betrachtet, oberhalb der Ausrichteinrichtung bewegbar ist. Somit wird in der ersten Anordnung eine Bewegung des Werkstücks ohne Ausrichten an der Ausrichteinrichtung ermöglicht.

Gemäß einer weiteren Ausführungsform ist eine Antriebseinheit, insbesondere ein elektrischer Motor, ein Linearantrieb oder ein pneumatischer Antrieb, zur Bewegung der Auflageeinrichtung von der ersten Anordnung in die zweite Anordnung vorgesehen. Somit kann je nach Anforderung die Auflageeinrichtung von einer ersten Anordnung in eine zweite Anordnung bewegt werden, oder umgekehrt.

Es ist bevorzugt, dass die Auflageeinrichtung eine Vielzahl von Luftauslässen und/oder Gleitelemente, wie Kugeln, aufweist. Die Luftauslässe können durch austretende Luft ein Luftkissen zwischen der Auflageeinrichtung und dem Werkstück bereitstellen.

Die Gleitelemente, insbesondere Kugeln, können so befestigt sein, dass sie bei einer Bewegung von der ersten Anordnung in die zweite Anordnung der Auflageeinrichtung nach oben schwenken und somit in den Eingriffsbereich gelangen.

Wird die Übergabevorrichtung in einer ersten (insbesondere horizontalen) Anordnung verwendet, können die Gleitelemente, insbesondere Kugeln, unterhalb der Förderebene befindlich sein. Somit ist auch ein manuelles Verschieben von Werkstücken quer zu den Gleitelemente, insbesondere Kugeln, möglich.

Die Übergabevorrichtung kann eine Anlageeinrichtung umfassen, an der das Werkstück vor einem Ausrichten anlegbar ist. Somit kann das Werkstück vor dem Ausrichten an der Anlageeinrichtung angelegt werden.

Die Anlageeinrichtung kann ein Band sein, wobei das Band um Umlenkrollen geführt ist. Somit kann das Werkstück nach dem Anlegen an der Anlageeinrichtung durch eine Bewegung des Bandes bewegt werden.

Zumindest eine der Umlenkrollen kann angetrieben sein, sodass ein motorischer Antrieb der Anlageeinrichtung umgesetzt werden kann.

Die Auflageeinrichtung kann ferner in einer dritten Anordnung, die zwischen der ersten Anordnung und der zweiten Anordnung befindlich ist, positionierbar sein. Somit können beispielsweise unterschiedliche Werkstückdicken berücksichtigt werden.

Die Auflageeinrichtung kann in der zweiten Anordnung in einem Winkel zwischen 1° und 20°, bevorzugt in einem Winkel zwischen 3° und 10°, relativ zur Auflageeinrichtung in der ersten Anordnung geneigt sein.

Dabei ist es auch möglich, dass mehrere zweite Anordnungen definiert sind. Der Winkel der zweiten Anordnung kann je nach der Dimension und/oder Gewicht eines auszurichtenden Werkstücks gewählt werden und somit der durch Gewichtskraft bedingten Beschleunigung des Werkstücks Rechnung tragen.

Gemäß einer Ausführungsform umfasst die Übergabevorrichtung einen Sensor, der eingerichtet ist, einen Kontakt mit dem Werkstück zu erfassen, wenn das Werkstück an der Ausrichteinrichtung ausgerichtet ist. Bei Erfassung des Werkstücks mit dem Sensor kann festgestellt werden, dass das Werkstück ausgerichtet ist. Diese Information kann genutzt werden, um eine definierte Aufnahme des Werkstücks durch eine Handhabungseinrichtung, wie einen Roboter, zu steuern.

Der Sensor kann als Kontaktsensor oder als kontaktlos arbeitender Sensor ausgebildet sein.

Die Übergabevorrichtung kann einen weiteren Sensor aufweisen, um eine an einem Werkstück vorgesehene Markierung, wie einen Barcode, zu erfassen. Somit können Werkstückinformationen, wie die Werkstückdimensionen, übergeben werden.

Gemäß einer weiteren Ausführungsform umfasst die Übergabevorrichtung zumindest ein Rollelement in einem Bereich, in dem das Werkstück zur Übergabevorrichtung gelangt.

Das zumindest eine Rollelement kann derart angeordnet sein, dass das Werkstück mit dem zumindest einen Rollelement in Kontakt kommt, wenn die Auflageeinrichtung in der zweiten Anordnung positioniert ist. Es ist bevorzugt, dass das zumindest eine Rollelement in der ersten Anordnung verdeckt ist.

Gemäß einer weiteren Zielrichtung wird ein System bereitgestellt, wobei das System eine Übergabevorrichtung gemäß einem der vorangegangenen Aspekte sowie eine Beschichtungsmaschine oder eine Bearbeitungsmaschine umfasst.

Die Übergabevorrichtung kann benachbart zu einem Einlauf der Beschichtungsmaschine oder Bearbeitungsmaschine vorgesehen sein, und die Übergabevorrichtung ist bevorzugt eingerichtet, ein Werkstück zur Beschichtungsmaschine oder Bearbeitungsmaschine oder einer am Einlauf der Beschichtungsmaschine oder Bearbeitungsmaschine angeordneten Einrichtung zu übergeben.

Das System kann eine Fördereinrichtung aufweisen, um ein Werkstück, welches die Beschichtungsmaschine oder die Bearbeitungsmaschine durchlaufen hat, zu der Übergabevorrichtung zu bewegen.

Gemäß einem weiteren Aspekt wird ein Verfahren bereitgestellt, wobei im Rahmen des Verfahrens eine Übergabevorrichtung oder ein System gemäß einem der zuvor beschriebenen Aspekte zum Einsatz kommen kann. Das Verfahren umfasst die Schritte: Bewegen einer Auflageeinrichtung von einer ersten Anordnung in eine zweite Anordnung, und Ausrichten des Werkstücks in der zweiten Anordnung der Auflageeinrichtung.

Das genannte Werkstück ist insbesondere ein plattenförmiges Werkstück, wobei es ferner bevorzugt ist, dass das Werkstück zumindest abschnittsweise Holz, einen Holzwerkstoff oder Kunststoff umfasst.

### Kurze Beschreibung der Zeichnungen

Weitere Merkmale und Vorteile der Erfindung ergeben sich aus der nachfolgenden Beschreibung einer Ausführungsform sowie bestimmter Modifikationen unter Bezugnahme auf die beiliegenden Zeichnungen.

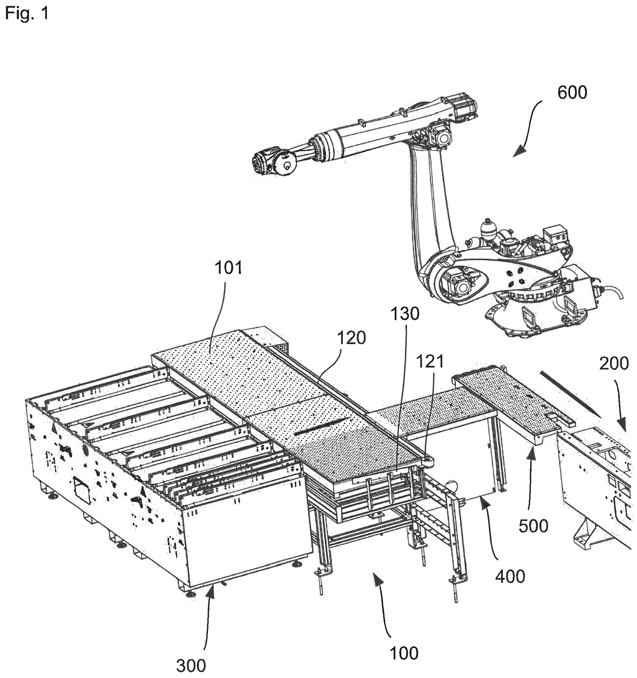

- Fig. 1: zeigt eine Anordnung mit einer erfindungsgemäßen Übergabevorrichtung im Bereich der Zuführung zu einer Beschichtungsmaschine.

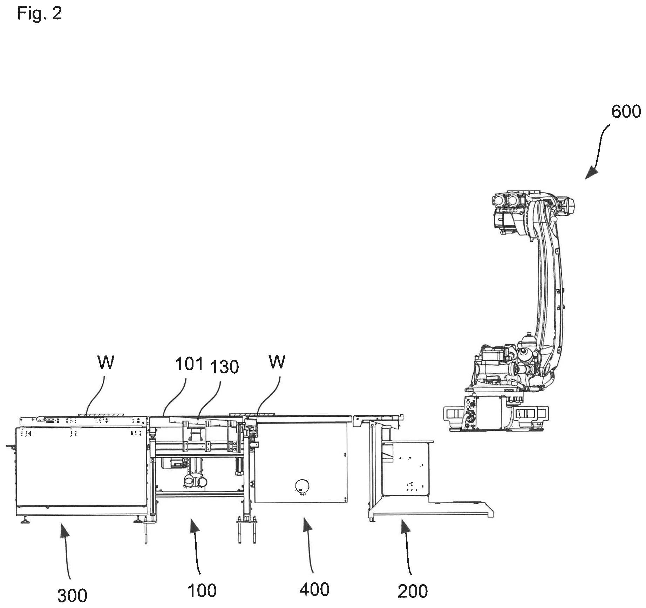

- Fig. 2: ist eine Seitenansicht der in Figur 1 dargestellten Anordnung.
- Fig. 3: ist eine Detailansicht der Übergabevorrichtung gemäß der Darstellung in Figur 2.

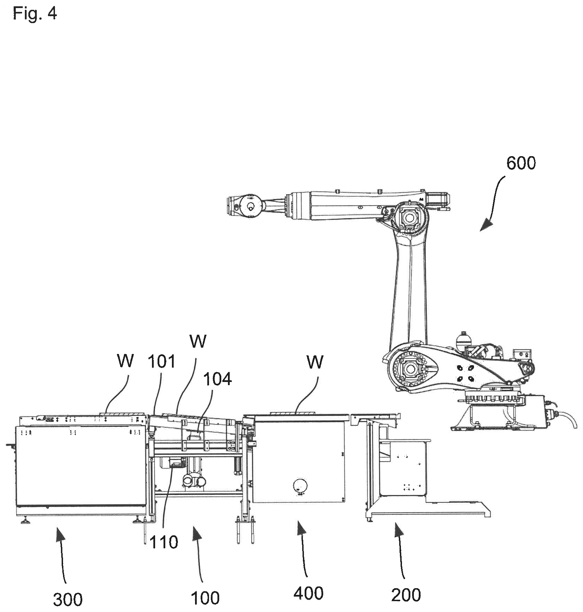

- Fig. 4: zeigt die Übergabevorrichtung in einem Zustand zum Ausrichten eines Werkstücks.
- Fig. 5: ist eine Detailansicht der Übergabevorrichtung gemäß Figur 4.

### Beschreibung der bevorzugten Ausführungsform

Anhand der Figuren wird eine bevorzugte Ausführungsform der Erfindung anschaulich beschrieben. Modifikationen bestimmter Merkmale können miteinander kombiniert werden, um weitere Ausführungsformen auszubilden.

Die Ausführungsform der Erfindung betrifft eine Übergabevorrichtung 100, die in einem Zuführbereich einer Beschichtungsmaschine 200 angeordnet ist. Mit der Übergabevorrichtung 100 wird ein Werkstück W von einer Transporteinheit 300 zu einer Aufnahmeeinheit 400 übergeben. Von der Aufnahmeeinheit 400 gelangt das Werkstück zu einer Zuführeinrichtung 500, von der aus das Werkstück W in die Beschichtungsmaschine 200 eingeführt wird.

Zur Beschichtung einer Schmalfläche eines Werkstücks W wird das plattenförmige Werkstück W mittels der Beschichtungsmaschine 200 an einer Schmalseite mit einem streifenförmigen Beschichtungsmaterial versehen werden. Dies geschieht in einem Durchlauf des Werkstücks W durch die Beschichtungsmaschine 200.

Um nachfolgend weitere Schmalseiten des Werkstücks W mit einem streifenförmigen Beschichtungsmaterial zu versehen, wird das Werkstück manuell oder mit der mittels einer Fördereinrichtung zurück in den Zuführbereich der Beschichtungsmaschine 200 bewegt und in einem weiteren Durchlauf durch die Beschichtungsmaschine 200 transportiert. Im Zuge dieses weiteren Durchlaufs wird an einer noch nicht beschichteten Seite des Werkstücks W ein Beschichtungsmaterial angebracht.

Benachbart zur Übergabevorrichtung 100 ist die Transporteinheit 300 vorgesehen, mit der das Werkstück W von einer (nicht dargestellten) Fördereinrichtung übernommen und in Richtung der Übergabevorrichtung 100 bewegt wird. Auch kann gemäß einer Modifikation eine direkte Übergabe des Werkstücks W von der (nicht dargestellten) Fördereinrichtung zur Übergabevorrichtung 100 erfolgen.

Wie nachfolgend beschrieben ist die Übergabevorrichtung 100 gemäß der Ausführungsform eingerichtet, in mehreren Betriebsmodi bereitgestellt zu werden.

An einer der Transporteinheit 300 gegenüberliegenden Seite der Übergabevorrichtung 100 ist die Aufnahmeeinheit 400 angeordnet, die eingerichtet ist, ein Werkstück von der Übergabevorrichtung 100 zu übernehmen und zu einer Zuführeinrichtung 500 zuzuführen. Die Aufnahmeeinheit 400 ist weist hierzu eine Auflagefläche auf. Benachbart zur Aufnahmeeinheit 400 ist die Zuführeinrichtung 500 angeordnet, wobei Zuführeinrichtung 500 im Ausführungsbeispiel an der Aufnahmeeinheit 400 angebracht ist, jedoch gemäß einer Modifikation auch eigenständig vorgesehen sein kann.

Die Zuführeinrichtung 500 ist zwischen der Aufnahmeeinheit 400 und der genannten Beschichtungsmaschine 200 angeordnet und weist wie die Aufnahmeeinheit 400 eine Auflagefläche auf, die bevorzugt im Wesentlichen höhengleich angeordnet sind. Somit kann ein Werkstück von der Übergabevorrichtung 100 und über die Aufnahmeeinheit 400 und die Zuführeinrichtung 500 in die Beschichtungsmaschine 200 bewegt werden.

Die Aufnahmeeinheit 400 und/oder die Zuführeinrichtung 500 weist/weisen in der Auflagefläche Luftauslässe auf. Durch die durch die Luftauslässe austretende Luft wird ein Luftkissen zwischen der Auflagefläche und dem Werkstück erzeugt, sodass das Werkstück gewissermaßen schwebt. Gemäß einer Modifikation können auch oder zusätzlich eine Rollenbahn in der jeweiligen Auflagefläche vorgesehen sein, um ein Werkstück im Wesentlichen ohne oder mit geringem Widerstand zu bewegen.

Die Übergabevorrichtung 100 weist eine Auflageeinrichtung 101 auf, die bevorzugt mit einer Rollenbahn und/oder Luftauslässen versehen ist, und eingerichtet ist, ein oder mehrere Werkstücke aufzunehmen. Ähnlich wie bereits zur Aufnahmeeinheit 400 und/oder Zuführeinrichtung 500 beschrieben, wird (im Fall von Luftauslässen) eine durch die Luftauslässe austretende Luft ein Luftkissen zwischen der Auflagefläche und dem Werkstück erzeugt, sodass das Werkstück gewissermaßen schwebt oder leichtgängig gleitet.

Die Auflageeinrichtung 101 ist an der zur Transporteinheit 300 weisenden Seite an einem Gelenk 102 schwenkbar gelagert. Das Gelenk 102 ist an einem Ständer 103 der Übergabevorrichtung 100 angebracht.

In einem mittigen Bereich, also einem Bereich zwischen der Transporteinheit 300 und der Aufnahmeeinheit 400, umfasst die Übergabevorrichtung 100 eine verstellbare Aufnahme 104, die die Auflageeinrichtung 101 abstützt. Die Aufnahme 104 ist in vertikaler Richtung bewegbar, sodass die Auflageeinrichtung 101 zumindest zwischen zwei Positionen bewegt, insbesondere geschwenkt, werden kann.

Die Übergabevorrichtung 100 umfasst mehrere Rollelemente 105 an der zur Transporteinheit 300 weisenden Seite, an der das Werkstück W zur Übergabevorrichtung 100 gelangt.

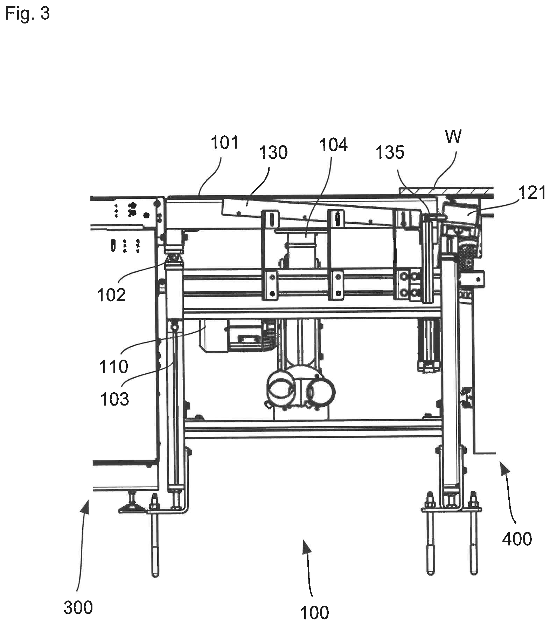

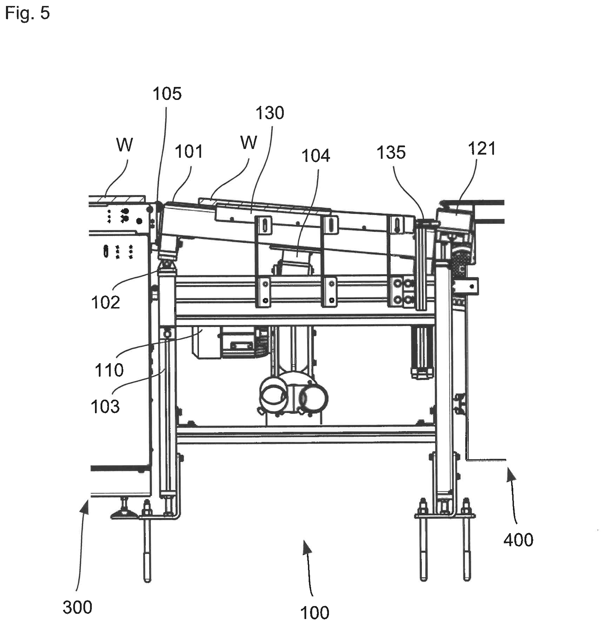

In Figur 3 ist eine horizontale Ausrichtung der Auflageeinrichtung 101 dargestellt (erste Anordnung), wohingegen die Auflageeinrichtung 101 in Figur 5 in einer geneigten Anordnung (zweiten Anordnung) gezeigt wird. Die Übergabevorrichtung 100 ist eingerichtet, zumindest zwischen diesen Betriebsmodi zu wechseln.

Zur Betätigung der Bewegung der Aufnahme 104 ist eine Antriebseinheit 110 vorgesehen, mit der eine Bewegung der Aufnahme 104 durchgeführt werden kann. Die mit der Auflageeinrichtung 101 verbundene Aufnahme 104 bedingt bei einer entsprechenden Verstellung eine Bewegung der Auflageeinrichtung 101.

Ferner umfasst die Übergabevorrichtung 100 an der zur Aufnahmeeinheit 400 weisenden Seite ein Band 120 (Anlageeinrichtung), welches mittels Umlenkrollen 121 gehalten und gegebenenfalls bewegt werden kann. Hierzu kann beispielsweise eine der Umlenkrollen 121 angetrieben sein. Die Achsen der Umlenkrollen 121 sind dabei in einer zur vertikalen Richtung geneigten Ausrichtung angeordnet. Dies führt dazu, dass auch das Band 120 beziehungsweise die durch das Band 120 ausgebildete Fläche relativ zur vertikalen Richtung geneigt angeordnet ist.

Die Umlenkwalzen 121 sowie das Band 120 sind unterhalb einer Ebene angeordnet, die durch eine obere Seite der horizontal ausgerichteten Auflageeinrichtung 101 ausgebildet wird. Somit werden die Umlenkwalzen 121 sowie das Band 120 diesem Betriebsmodus der Übergabevorrichtung 100 durch die Auflageeinrichtung 101 verdeckt, in der die Auflageeinrichtung 101 in einer horizontalen Ausrichtung angeordnet ist. Somit kann ein Werkstück, das durch die Transporteinheit 300 zur Übergabevorrichtung 100 bewegt wird, in diesem Betriebsmodus der Übergabevorrichtung 100 über die Auflageeinrichtung 101 bewegt werden, ohne mit dem Band 120 zu kollidieren.

Ferner umfasst die Übergabevorrichtung 100 eine Ausrichteinrichtung 130, die - von einer Seite betrachtet - geneigt zu einer horizontalen Richtung ausgerichtet ist. Die Ausrichteinrichtung 130 ist als Lineal ausgebildet. An einer nahe zum Band 120 gelegenen Seite der Ausrichteinrichtung 130 ist ein Sensor 135 angeordnet, der eingerichtet ist, eine Berührung eines Werkstücks W an der Ausrichteinrichtung 130 zu erfassen.

Wird die Übergabevorrichtung 100 zum Ausrichten eines Werkstücks W verwendet, so wird die Auflageeinrichtung 101 geschwenkt und dabei an der zur Aufnahmeeinheit 400 weisenden Seite abgesenkt.

Die Rollelemente 105 sind derart angeordnet sein, dass das Werkstück W mit einem oder mehreren Rollelementen 105 in Kontakt kommt, wenn die Auflageeinrichtung in der zweiten Anordnung positioniert ist und auf die Auflageeinrichtung 101 bewegt wird. Somit kann das Werkstück W leichtgängig zur Auflageeinrichtung 101 bewegt werden. Die Rollenelemente 105 sind in der ersten Anordnung verdeckt.

Wenn ein Werkstück W in diesem Zustand über die Auflageeinrichtung 101 bewegt wird, gelangt das Werkstück mit dem Band 120 in Eingriff und wird bedingt durch die Schwerkraft oder gegebenenfalls angetrieben durch eine Antriebseinrichtung gegen das Band 120 gedrückt. Dies führt zur Anlage des Werkstücks W am Band 120.

Zum Ausrichten wird das Werkstück W durch das Band 120 in Richtung der Ausrichteinrichtung 130 bewegt. Wenn der Sensor 135 eine Berührung erfasst, wird erkannt, dass das Werkstück W in der durch das Band 120 und die Ausrichteinrichtung 130 bereitgestellten Ecke angeordnet und ausgerichtet ist.

Nachdem die Ausrichtung des Werkstücks W erfolgt ist, kann der Roboter 600 das ausgerichtete Werkstück W aufnehmen und zur Zuführeinrichtung 500 bewegen.

Obwohl im Rahmen der Ausführungsform ein Beschichten eines Werkstücks beschrieben wurde, kann anstelle der Beschichtungsmaschine eine Bearbeitungsmaschine zum, beispielsweise spanenden, Bearbeiten eines Werkstücks vorgesehen sein.

Ferner kann anstelle des Bands 120 eine Leiste vorgesehen sein, an der das Werkstück ausgerichtet werden kann.

## Patentansprüche

1. Übergabevorrichtung (100) zum Übergeben eines Werkstücks (W), umfassend:
eine Auflageeinrichtung (101), wobei die Auflageeinrichtung (101) in einer ersten Anordnung und in mindestens einer zweiten Anordnung positionierbar ist,
eine Ausrichteinrichtung (130) zum Ausrichten des Werkstücks (W),
wobei die Auflageeinrichtung (101) in der zweiten Anordnung derart positionierbar ist, dass ein an der Auflageeinrichtung (101) befindliches Werkstück (W) an der Ausrichteinrichtung (130) ausrichtbar ist.

2. Übergabevorrichtung (100) gemäß Anspruch 1, umfassend ein Gelenk (102), wobei die Auflageeinrichtung (101) von der ersten Anordnung zur zweiten Anordnung um das Gelenk (102) schwenkbar ist.

3. Übergabevorrichtung (100) gemäß einem der vorangegangenen Ansprüche, wobei die Auflageeinrichtung (101) in der ersten Anordnung eine Ebene bereitstellt, in der das Werkstück (W), in einer vertikalen Richtung betrachtet, oberhalb der Ausrichteinrichtung (130) bewegbar ist.

4. Übergabevorrichtung (100) gemäß einem der vorangegangenen Ansprüche, wobei die Auflageeinrichtung (101) in der ersten Anordnung im Wesentlichen in einer horizontalen Ebene angeordnet ist.

5. Übergabevorrichtung (100) gemäß einem der vorangegangenen Ansprüche, umfassend eine Antriebseinheit (110) zur Bewegung der Auflageeinrichtung (101) von der ersten Anordnung in die zweite Anordnung.

6. Übergabevorrichtung (100) gemäß einem der vorangegangenen Ansprüche, wobei die Auflageeinrichtung (101) eine Vielzahl von Luftauslässen und/oder Gleitelemente aufweist.

7. Übergabevorrichtung (100) gemäß einem der vorangegangenen Ansprüche, ferner umfassend eine Anlageeinrichtung (120), an der das Werkstück (W) vor einem Ausrichten anlegbar ist.

8. Übergabevorrichtung (100) gemäß Anspruch 7, wobei die Anlageeinrichtung (120) ein Band ist, wobei das Band um Umlenkrollen (121) geführt ist, wobei bevorzugt ist, dass zumindest eine der Umlenkrollen (121) angetrieben ist.

9. Übergabevorrichtung (100) gemäß einem der vorangegangenen Ansprüche, wobei die Auflageeinrichtung (101) in einer dritten Anordnung, die zwischen der ersten Anordnung und der zweiten Anordnung befindlich ist, positionierbar ist.

10. Übergabevorrichtung (100) gemäß einem der vorangegangenen Ansprüche, wobei die Auflageeinrichtung (101) in der zweiten Anordnung in einem Winkel zwischen 1° und 20°, bevorzugt in einem Winkel zwischen 3° und 10°, relativ zur Auflageeinrichtung (101) in der ersten Anordnung geneigt ist.

11. Übergabevorrichtung (100) gemäß einem der vorangegangenen Ansprüche, umfassend einen Sensor, der eingerichtet ist, das Werkstück zu erfassen, wenn das Werkstück an der Ausrichteinrichtung ausgerichtet ist.

12. Übergabevorrichtung (100) gemäß einem der vorangegangenen Ansprüche, ferner umfassend zumindest ein Rollelement (105) in einem Bereich, in dem das Werkstück zur Übergabevorrichtung (100) gelangt.

13. System, umfassend eine Übergabevorrichtung (100) gemäß einem der vorangegangenen Ansprüche sowie eine Beschichtungsmaschine (200) oder eine Bearbeitungsmaschine.

14. Verfahren zum Übergeben eines Werkstücks (W), umfassend:
Bewegen einer Auflageeinrichtung (101) von einer ersten Anordnung in eine zweite Anordnung, und Ausrichten des Werkstücks in der zweiten Anordnung der Auflageeinrichtung (101).
